Europäisches Patentamt

European Patent Office

Office européen des brevets

(19)

(11)     EP 1 548 405 A1

(12)     **EUROPEAN PATENT APPLICATION**

(43) Date of publication:
     **29.06.2005 Bulletin 2005/26**

(51) Int Cl.7: **G01C 21/34**, G01C 21/26,
     G08G 1/0968, G08G 1/01

(21) Application number: **04030461.0**

(22) Date of filing: **22.12.2004**

(84) Designated Contracting States:
     **AT BE BG CH CY CZ DE DK EE ES FI FR GB GR
     HU IE IS IT LI LT LU MC NL PL PT RO SE SI SK TR**
     Designated Extension States:
     **AL BA HR LV MK YU**

(30) Priority: **26.12.2003 JP 2003434756
     14.09.2004 JP 2004266759**

(71) Applicant: **AISIN AW CO., LTD.
     Anjo, Aichi 444-1192 (JP)**

(72) Inventors:
     • **Ishikawa, Hiroki Aisin AW Co., Ltd.
       Okazaki-shi Aichi 444-8564 (JP)**
     • **Zaitsu, Tomoyuki Aisin AW Co., Ltd.
       Okazaki-shi Aichi 444-8564 (JP)**

(74) Representative:
     **Leson, Thomas Johannes Alois, Dipl.-Ing.
     Tiedtke-Bühling-Kinne & Partner GbR,
     TBK-Patent,
     Bavariaring 4
     80336 München (DE)**

(54)     **System, method, and data structure for smoothing navigation data**

(57)     Systems and methods of smoothing navigation data may accumulate traffic information including, for each link, a congestion degree at a plurality of trip times, calculate a link travel time on the basis of the congestion degree for each trip time, and smooth the calculated link travel time.

FIG. 1

**Description**

<u>INCORPORATION BY REFERENCE</u>

The disclosure of Japanese Patent Application Nos. 2004-266759 filed on September 14, 2004 and 2003-434756 filed December 26, 2003 including the specifications, drawings, and abstracts are incorporated herein by reference in their entirety.

<u>BACKGROUND</u>

1. <u>Related Technical Fields</u>

Related fields include methods of smoothing navigation data, apparatus for smoothing navigation data, and navigation data structures.

2. <u>Description of the Related Art</u>

Japanese Patent Application Laid-Open No. 2002-148067, discloses a navigation method including accumulating received traffic information, date and time, and day of the week, and finding a shortest route or calculating a required period with the aid of the accumulated data.

In the aforementioned navigation method, however, the received traffic information is not always provided for all the links. For example, for some links only a congestion degree may be provided. The congestion degree may be classified into four stages, namely, "congested," "crowded," "not congested," and "uncertain." Although a vehicle speed range is defined for each of the stages, this defined speed is rather sweeping. Thus, the speed values derived from the congestion degree may be unreliable.

<u>SUMMARY</u>

Thus, it is beneficial to provide a method of smoothing navigation data, an apparatus for smoothing navigation data, and a smoothing navigation data structure wherein a link travel time calculated from a received congestion degree is smoothed.

Accordingly, various implementations provide a method of smoothing navigation data including accumulating traffic information including, for each link, a congestion degree at a plurality of trip times, calculating a link travel time on the basis of the congestion degree for each trip time, and smoothing the calculated link travel time.

Various implementations provide a system for smoothing navigation data including a memory that may accumulate traffic information including, for each link, a congestion degree at a plurality of trip times, and a controller. The controller may calculate a link travel time on the basis of the congestion degree for each trip time and smooth the calculated link travel time.

Various implementations provide a smoothing navigation data structure that may be produced by smoothing a link travel time calculated on the basis of traffic information that is made up of a congestion degree for each piece of time information.

<u>BRIEF DESCRIPTION OF THE DRAWINGS</u>

Examples will now be described with reference to the accompanying drawings, wherein:
FIG. 1 is a block diagram showing an exemplary system for smoothing navigation data; and
FIG. 2 is a flowchart showing an exemplary method of smoothing navigation data.

<u>DETAILED DESCRIPTION OF EMBODIMENTS</u>

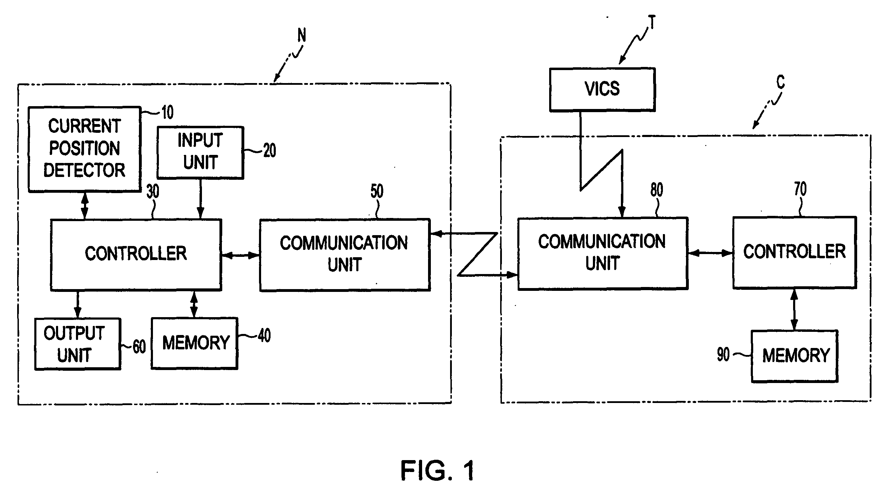

FIG. 1 is a block diagram showing an exemplary system for smoothing navigation data. This navigation system may be physically, conceptually, or functionally divided into, for example, a navigation apparatus N and an information communication system C, for example, installed in an information center. Navigation system N may be mounted in a vehicle. Further, FIG. 1 shows a road traffic information communication system T (hereinafter also referred to as VICS®) that may be provided in a road traffic information center.

The navigation system N may be provided with a current position detector 10 (such as, for example, a GPS receiver). The current position detector 10 may receive radio waves sent from an artificial satellite of a satellite navigation system (also known as GPS) to detect a current position of a vehicle as well as a present day and time.

In addition, the navigation system N may be provided with an input unit 20. The input unit 20 may be, for example, a portable remote controller that may send required information to a controller 30 (described later). The input unit 20 may also be, for example, a touch panel provided on a display screen of a display device. Such a display device may be part of an output unit 60 (described later).

Furthermore, the navigation system N may be provided with, for example, a controller 30, a memory 40, a communication unit 50, and/or an output unit 60. The controller 30 may include, for example, a CPU, a RAM, and/or a ROM and may be connected by, for example, bus lines.

The controller 30 may control, for example, map display, route search, and/or route guidance of the vehicle based upon, for example, a current position that is obtained by, for example, the current position detector 10, operation of the input unit 20, information in the memory 40, communication from communication unit 50, and/or information from the information communication system C.

The memory 40 may be, for example, a hard disk. Map data and/or traffic information data may be accumulated in the memory 40, for example, in a database or other data structure. The communication unit 50 may receive, for example, road traffic information from the information communication system C to output to the controller 30.

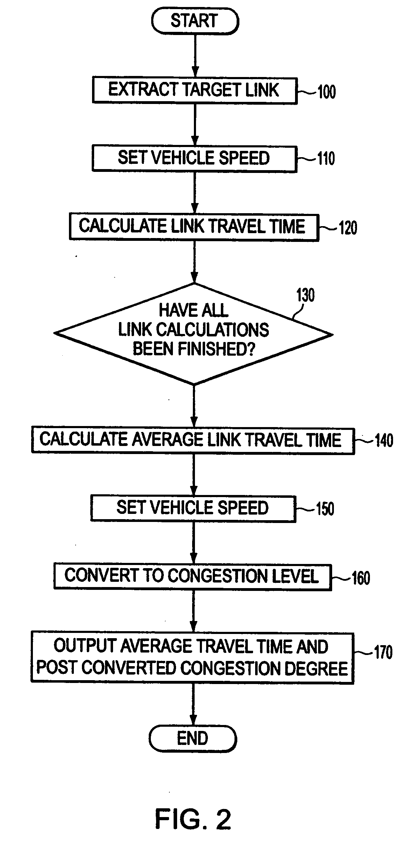

The information communication system C may include, for example, a controller 70, a communication unit 80, and/or the memory 90. The communication unit 80 may execute wireless communication between the communication unit 50 and VICS T. The controller 70 may execute, for example, the exemplary methods shown in the flowcharts in Figs. 2 to 6. The controller 70 may also control the transfer of information between, for example, the communication unit 50 and VICS T via, for example, the communication unit 80. Note that, control programs may be stored in advance in, for example, a ROM of the controller 70.

Link travel times TT, vehicle speeds, congestion degrees D, and/or traffic information data (such as, for example, roads closed to traffic and traffic regulations) may be sent from VICS T and stored in the memory 90, for example, in a database or other data structure. A congestion degree D is a degree of traffic congestion determined by a vehicle speed and the congestion degree may include, for example, four-stage data, that is, for example, "congested," "crowded," "not congested," and "uncertain." According to this example, the degree of congestion decreases in the order of "congested," "crowded," and "not congested." The congestion degree is not limited to four stages and may include a plurality of stages.

Further, a VICS link length may be stored in the memory 90 as map data. The VICS link length is an actual length of a target link.

As used herein, the term link refers to, for example, a road or portion of a road. For example, according to one type of road data, each road may include a plurality of componential units called links. Each link may be separated and defined by, for example, an intersection, an intersection having more than three roads, a curve, and/or a point at which the road type changes.

The output unit 60 may be, for example, a display unit. Under the control of the controller 30, the output unit 60 may display data. A display panel, such as, for example, a liquid crystal panel of the output unit 60 may be disposed in an instrument panel that is provided in a front wall in a cabin of the vehicle.

In the exemplary system described above, the controller 70 of the information communication system C, for example, may execute the exemplary method shown in FIG. 2. As shown in FIG. 2, in step S100, a target link is extracted from the map data stored in, for example, the memory 90. As used herein a "target link" represents a first or next link in a predetermined group of links. The predetermined group may be, for example, a group necessary for a route search, a group within a predetermined area of the map data, or a whole of the map data (such as all of Japan).

Then in step 110, a vehicle speed is set. Specifically, a vehicle speed corresponding to the congestion degree is set on the basis of, for example, the exemplary data in Table 1. Thus, on the basis of a congestion degree corresponding to the target link and included in the traffic information data, a vehicle speed corresponding to the congestion degree is set.

Table 1

|  | Congested | Crowded | Not congested |
|---|---|---|---|
| General road | 5km/h | 15km/h | 40km/h |
| Urban highway | 10km/h | 30km/h | 60km/h |
| Intercity highway | 20km/h | 50km/h | 80km/h |

Table 1 shows exemplary data indicating a relationship among, for example, vehicle speed, road type, and congestion degree. The road type mentioned herein may refer to, for example, a general road, an urban highway, an intercity highway, or any other type of road. Based on Table 1, for example, if the target link is a general road, and the congestion degree is "congested," "crowded," or "not congested," the vehicle speed may be set to 5km/h, 15km/h, or 40km/h, respectively. The data such as that shown in exemplary Table 1 may be stored in the memory 90 in advance. Operation proceeds to step 120.

In step 120, a link travel time of the target link is calculated by dividing a link length of the target link by the set vehicle speed. Then, in step 130, it is determined whether a link travel time of every link in the predetermined group has been calculated. If a link travel time of every link in the predetermined group has not been calculated operation returns to step 100.

If a link travel time of every link in the predetermined group has been calculated, operation continues to step 140. In step 140, an average or "smoothed" link time is calculated. Specifically, for example, the calculated link travel time may be denoted by $T$. An averaged link travel time $\bar{T}$ may be calculated using equation (1) shown below, on the basis of the one or more travel times $T_i$ for trip times previous to the calculated link travel time T, where i is the number of travel times for trip times previous to the calculated link travel time that will be used for the average.

$$\bar{T} = \frac{\sum_{i=1}^{n} T_i}{n} \qquad (1)$$

Thus, if two travel times for previous trip times are used the averaged link travel time $\bar{T}$ may be determined as $(T_1 + T_2)/2$. Operation continues to step S150.

As used herein, the term "smoothing" refers to bringing extreme or abnormal values in a data set closer to the remaining values in the data set. For example, when the data set is plotted, the extreme or normal values may create spikes in the data. Thus, by bringing the extreme or abnormal values closer to the remaining values the spikes may be "smoothed" out. It should be appreciated that smoothing may be accomplished by using, for example, means, medians, statistical interpolation, standard deviation, and/or any other method or means by which extreme values may be moved closer to remaining values in a data set.

As used herein, the term "trip time" refers to the time at which a link may be traveled. This is because a travel time for a particular link may vary depending on the time of day, day, and/or time of year. For example, trip times may be set as predefined intervals such as, for example, 12 PM - 2 PM. Accordingly, a trip time previous to the 12 PM - 2 PM trip time may be 10 AM - 12 PM or 6 AM - 8 AM. The trip times may be defined by large or small intervals and may also be defined by or grouped into events, such as "morning rush hour," "evening rush hour," or "weekend."

In step 150, a vehicle speed is set. Specifically, a vehicle speed of the target link is calculated by dividing a link length of the target link by the averaged link travel time $\bar{T}$. Then in step 160, the set vehicle speed is converted into a congestion level. Specifically, for example, the set vehicle speed of each link is converted into a congestion degree based on, for example, the exemplary data in Table 2.

Table 2

| | Congested | Slightly congested | Crowded | Slightly crowded | Not congested |
|---|---|---|---|---|---|
| General road | V ≤ 8km/h | 8km/h < V ≤ 12km/h | 12km/h < V ≤ 20km/h | 20km/h < V ≤ 32km/h | 32km/h < V |
| Urban highway | V ≤ 15km/h | 15km/h < V ≤ 25km/h | 25km/h < V ≤ 40km/h | 40km/h < V ≤ 55km/h | 55km/h < V |
| Intercity highway | V ≤ 25km/h | 25km/h < V ≤ 40km/h | 40km/h < V ≤ 60km/h | 60km/h < V ≤ 75km/h | 75km/h < V |

In Table 2, as is the case with Table 1, the road type may refer to, for example, a general road, an urban highway, an intercity highway, or any other road type. For example, if the road type of a target link is a general road, a set vehicle speed, which is expressed as Vkm/h, may be converted into a congestion degree such as, for example, "congested," "slightly congested," "crowded," "slightly crowded," or "not congested," on the basis of, for example, V ≤ 8km/h, 8km/h < V ≤ 12km/h, 12km/h < V ≤ 20km/h, 20km/h < V ≤ 32km/h or 32km/h < V, respectively. Operation continues to step 170.

In step 170, the smoothed link travel time (e.g., step 140) and congestion degree (e.g., step 160) may be output to, for example, the memory 90 and/or the communication unit 80. The data may then, for example, be transmitted to the communication unit 50 by the communication unit 80. After being received by the communication unit 50, the controller 30 may store the smoothed link travel time in, for example, the memory 40.

According to the above-described exemplary method, a vehicle speed corresponding to a congestion degree may be set for each target link in the predetermined group, and a link travel time may be calculated from a link length and the set vehicle speed. Then, for each extracted target link, a smoothed link travel time is calculated.

This smoothed link travel time may be set as a link travel time in, for example, the traffic information for each extracted target link. Accordingly, if a particular link travel time is abnormally large or small compared to one or more previous travel times for the same link, the abnormal value of the link travel time may be counterbalanced in the average link travel time. If the average link travel time is set as a link travel time in the traffic information for each extracted target link, the traffic information may be more reliable by "smoothing out" any extreme or abnormal values. Further, in predicting traffic information by statistically processing an average link travel time, the quality of statistically processed data may be enhanced.

Furthermore, because the more reliable traffic information may be stored in the memory 40 of the navigation system N, a route search may be conducted using the reliable data stored in the memory 40. In addition, the output unit 60 may correctly recognize a congestion degree of a searched route to be followed by the vehicle.

Further, because the average link travel time for each extracted target link and the congestion degree corresponding thereto may be stored in the memory 90 of the information communication system C, the reliable traffic information may be accessed from the information communication system C from, for example, a home terminal.

It should be appreciated that the above-described exemplary system and method are not limiting, various modifications may be made without departing from the broad scope and spirit of the underlying principles.

For example, a smoothed link travel time at a predetermined trip time (when traveling will occur) may be calculated by accumulating traffic information including a congestion degree at various trip times (calculated on the basis of the congestion degree) may be calculated by statistically processing link travel times at the plurality of trip times including a link travel time at the predetermined trip time.

Thus, even if abnormal traffic information is included in the accumulated traffic information, the link travel time calculated from traffic information may be smoothed by statistically processing the link travel times at the plurality of trip times including the link travel time at the predetermined trip time. Thereby, the link travel time may be smoothed and may be prevented from becoming abnormal and can be made more realistic and highly reliable.

An average link travel time for each extracted target link may be an average of a plurality of link travel times, for example, two or four link travel times or the like including a current link travel time to be targeted. Further, the plurality of link travel times may be the current link travel time and link travel times following it.

An average link travel time may be calculated by smoothing three link travel times, for example, through a processing of making an abnormal link travel time close to a normal period or the like, instead of averaging the link travel times. Furthermore, a statistically processed value such as a median and the respective calculated link travel times or the like may be adopted.

The navigation system N may directly receive traffic information from the vehicle information communication system T and may perform at least part of the aforementioned exemplary methods for smoothing navigation data.

Again, while various features have been described in conjunction with the examples outlined above, various alternatives, modifications, variations, and/or improvements of those features may be possible. Accordingly, the various examples, as set forth above, are intended to be illustrative. Various changes may be made without departing from the broad spirit and scope of underling principles.

    Systems and methods of smoothing navigation data may accumulate traffic information including, for each link, a congestion degree at a plurality of trip times, calculate a link travel time on the basis of the congestion degree for each trip time, and smooth the calculated link travel time.

## Claims

1.   A method of smoothing navigation data, comprising:

     accumulating traffic information including, for each link, a congestion degree at a plurality of trip times;
     calculating a link travel time on the basis of the congestion degree for each trip time; and
     smoothing the calculated link travel time.

2.   The method of claim 1, wherein smoothing the calculated link travel time comprises:

     smoothing a target calculated link travel time with a plurality of calculated link travel times including the targeted calculated link travel time.

3.   The method of claim 2, wherein smoothing a target calculated link travel time with a plurality of calculated link travel times including the targeted calculated link travel time comprises:

   smoothing the targeted link travel time by statistically processing the plurality of calculated link travel times including the targeted calculated link travel time.

4. The method of claim 2, wherein smoothing a target calculated link travel time with a plurality of calculated link travel times including the targeted calculated link travel time comprises:

   calculating the arithmetic mean of the plurality of calculated link travel times including the targeted calculated link travel time.

5. The method of claim 1, further comprising:

   converting the smoothed calculated link travel time into a congestion degree.

6. A storage medium storing a set of program instructions executable on a data processing device and usable for performing the method recited in claim 1.

7. A system for smoothing navigation data, comprising:

   a memory that accumulates traffic information including, for each link, a congestion degree at a plurality of trip times; and
   a controller that:

      calculates a link travel time on the basis of the congestion degree for each trip time; and
      smoothes the calculated link travel time.

8. The system of claim 7, wherein the controller:

   smoothes a target calculated link travel time with a plurality of calculated link travel times including the targeted calculated link travel time.

9. The system of claim 8, wherein the controller:

   smoothes the targeted link travel time by statistically processing the plurality of calculated link travel times including the targeted calculated link travel time.

10. The system of claim 8, wherein the controller:

   calculates the arithmetic mean of the plurality of calculated link travel times including the targeted calculated link travel time.

11. The system of claim 7, wherein the controller:

   converts the smoothed calculated link travel time into a congestion degree.

12. A navigation apparatus comprising the system of claim 7.

13. A navigation information center comprising the system of claim 7.

14. A smoothing navigation data structure that is produced by smoothing a link travel time calculated on the basis of traffic information that is made up of a congestion degree for each piece of time information.

15. The smoothing navigation data structure according to claim 14, wherein:

   the calculated link travel time is smoothed by statistically processing a plurality of calculated link travel times including the calculated link travel time.

**16.** The smoothing navigation data structure according to claim 14, wherein:

the smoothed calculated link travel time is converted into a congestion degree.

**17.** A storage medium storing the data structure of claim 14.

FIG. 1

START

EXTRACT TARGET LINK ~100

SET VEHICLE SPEED ~110

CALCULATE LINK TRAVEL TIME ~120

HAVE ALL
LINK CALCULATIONS
BEEN FINISHED? 130

CALCULATE AVERAGE LINK TRAVEL TIME ~140

SET VEHICLE SPEED ~150

CONVERT TO CONGESTION LEVEL ~160

OUTPUT AVERAGE TRAVEL TIME AND
POST CONVERTED CONGESTION DEGREE ~170

END

FIG. 2

**European Patent Office**

**EUROPEAN SEARCH REPORT**

Application Number

EP 04 03 0461

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2001/029425 A1 (MYR DAVID) 11 October 2001 (2001-10-11) * paragraphs [0061], [0145], [0147]; claims 1,4 * | 1-17 | G01C21/34 G01C21/26 G08G1/0968 G08G1/01 |
| | ----- | | |
| X | WO 98/59329 A (SIEMENS AKTIENGESELLSCHAFT; OBERSTEIN, KARLA; SCHUSTER, THOMAS) 30 December 1998 (1998-12-30) * abstract * * claims 1,2 * | 1-17 | |
| | ----- | | |
| X | US 5 822 712 A (OLSSON ET AL) 13 October 1998 (1998-10-13) * column 5, line 4 - line 8 * * column 6, line 1 - line 4 * * column 6, line 66 - column 7, line 5 * * column 12, line 67 - column 13, line 16 * * column 14, line 5 - line 18 * | 1-17 | |
| | ----- | | |

TECHNICAL FIELDS SEARCHED (Int.Cl.7)

G01C
G08G

The present search report has been drawn up for all claims

| Place of search | Date of completion of the search | Examiner |
|---|---|---|
| The Hague | 29 April 2005 | Hunt, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ...........................................................................
& : member of the same patent family, corresponding document

EPO FORM 1503 03.82 (P04C01)

**EP 1 548 405 A1**

## ANNEX TO THE EUROPEAN SEARCH REPORT
## ON EUROPEAN PATENT APPLICATION NO.

EP 04 03 0461

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2005

| Patent document cited in search report | | Publication date | Patent family member(s) | | Publication date |
|---|---|---|---|---|---|
| US 2001029425 | A1 | 11-10-2001 | US | 6480783 B1 | 12-11-2002 |
| | | | AU | 4097201 A | 24-09-2001 |
| | | | WO | 0169570 A2 | 20-09-2001 |
| WO 9859329 | A | 30-12-1998 | WO | 9859329 A1 | 30-12-1998 |
| | | | EP | 0992031 A1 | 12-04-2000 |
| US 5822712 | A | 13-10-1998 | SE | 470367 B | 31-01-1994 |
| | | | DE | 69329119 D1 | 31-08-2000 |
| | | | DE | 69329119 T2 | 15-03-2001 |
| | | | EP | 0670066 A1 | 06-09-1995 |
| | | | JP | 8503317 T | 09-04-1996 |
| | | | SE | 9203474 A | 31-01-1994 |
| | | | WO | 9411839 A1 | 26-05-1994 |

EPO FORM P0459

For more details about this annex : see Official Journal of the European Patent Office, No. 12/82

11